# EUROPEAN PATENT APPLICATION

(11) **EP 1 724 898 A1**
(43) Date of publication of application: **22.11.2006**
(21) Application number: 06425314.9
(22) Date of filing: 09.05.2006
(51) Int. Cl.: H02G 3/38, H02G 3/04

(54) **Column for housing electrical apparatuses**

(30) Priority: 17.05.2005 IT RM20050239
(71) Applicant: BTICINO S.P.A., 20154 Milano (IT)
(72) Inventor: Ricciardi, Rocco, 21046 Malnate (Varese) (IT)
(74) Representative: Siniscalco, Fabio

(57) **Abstract**

Column (40) for housing electrical apparatuses generally making up part of electrical installations in civilian buildings and the like, including a containment and support structure (1), said structure being embeddable in a building wall (45) of a building and comprising two substantially parallel and spaced lateral walls (5, 6) and connected to each other by a bottom wall (7), said lateral walls (5, 6) and said bottom wall (7) defining a housing channel (8) inside said column (40) and intended to be received in the thickness of said building wall (45), said channel having an open side towards said building wall (45).

## Description

The present invention refers to the technical field of electrical facilities of homes and the like, and more in detail regards a column for housing electrical apparatuses, particularly for apparatuses of home automation systems.

As is known, the ever rising diffusion of electronic and digital technologies has recently involved control, management and automation facilities of civilian buildings. This has led to the introduction within the home environment of increasingly complex and articulated facilities, with the creation of domestic (or domotic) networks for the interconnection and integration of various electrical systems designed both to provide traditional services (such as the distribution and management and electrical energy and telephone) and advanced services (Internet, video and digital auto, advanced management of the resources and energy savings, access and safety).

As is known, each of such systems is generally formed by centralised management and control apparatuses connected to detection or actuation devices of peripheral type. For example, the home facility for the distribution of the electrical energy is generally formed by an exchange comprising protection and control apparatuses and peripheral apparatuses, such as for example outlets and switches distributed inside the home environment. Similarly, an anti-intrusion facility is formed by a central detection and signalling unit with a series of distributed peripheral detectors.

With the ever increasing number of electronic systems equipping civilian building, there is the need to find a suitable setting inside the home environment for all the centralised management and control apparatuses of such systems. Such need is particularly felt in domotic facilities, wherein in order to ensure the integration and interoperability between the different systems, it is necessary to foresee connections for the exchange of information between the different centralised apparatuses, so that a random and scattered setting of the latter inside the home environment results problematic.

The object of the present invention is to make available a structure which is such to satisfy this need, while at the same time respecting the pressing aesthetic and size requirements which characterise a home environment.

Such object is attained by means of a column for housing electrical apparatuses, particularly for apparatuses of home automation systems, as defined in the attached first claim in its most general form and in the dependent claims in several particular embodiments.

The invention will be better understood from the following detailed description of one of its embodiments, given as exemplifying and therefore in no manner limiting, in reference to the attached drawings, wherein:
- Figure 1 is an axonometric separated parts view of a containment and support structure subdivided into modular elements and comprised in a column in accordance with the present invention;
- Figure 2 is an axonometric view of a reinforcement module associable with each of the modular elements of the structure of figure 1;
- Figure 3 is an axonometric view of the structure of figure 1 coupled to a plurality of reinforcement modules represented in figure 2;
- Figure 4 is a partial and perspective view of a home environment comprising a column in accordance with the present invention embedded in a building wall;
- Figure 5 illustrates a particularly preferred embodiment of fastener usable for fixing a cover plate to the reinforcement element of figure 2; and
- Figure 6 shows in sectional and perspective view the coupling modes between the cover plate and the reinforcement element by means of the fastener of figure 5.

In the figures, equivalent or similar elements will be indicated by means of the same numeric references.

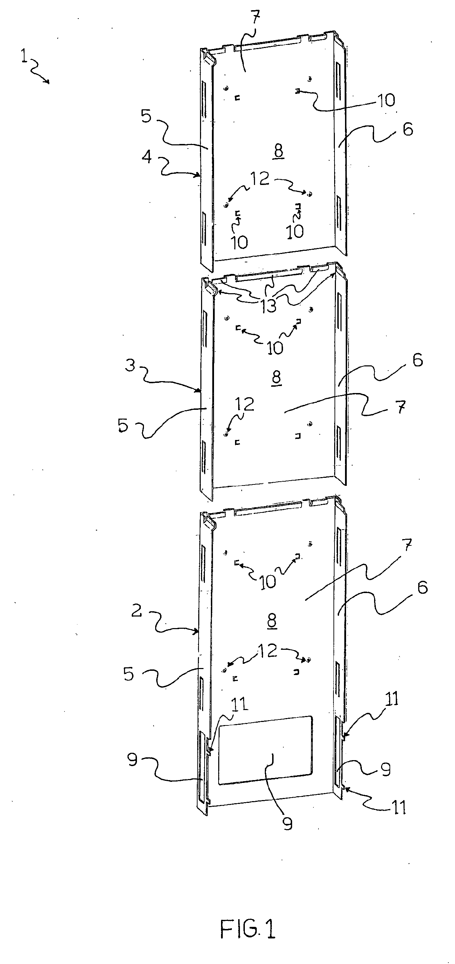

In figure 1, a containment and support structure 1 is shown, advantageously employable for the realisation of a column, in accordance with the present invention, for housing electrical apparatuses generally making up part of electrical installations in civilian buildings and the like. In a particularly advantageous embodiment, such structure is realised in bent sheet steel and is preferably a self-supporting.

As shown in figure 1, the containment and support structure 1 is preferably modular and is in practice formed by a plurality of modular elements 2, 3, 4 which may be vertically stacked on each other. Preferably, each of such modular elements 2, 3, 4 is a single piece made in sheet steel and comprises connection means so to be connected to an additional adjacent modular element. Preferably, as represented in figure 1, such connection means include tabs 13 (for the sake of simplicity, marked with a reference symbol only in the modular element 3) adapted to fix two consecutive modular elements between them, so that the structure resulting from their composition is a self-support structure.

The containment and support structure 1 has a substantially "U" or "C" profile and is advantageously embeddable in a partition or perimeter wall of a building. In particular, the containment and support structure 1 resulting from the composition of the module elements 2, 3, 4 comprises two lateral walls 5, 6 substantially parallel to and spaced from each other. The two lateral walls 5, 6 are connected by a bottom wall 7, so to define a housing channel 8 intended to be received in the thickness of the building wall. Such housing channel 8, of substantially quadrangular section, has an open side towards a side of the building wall. Advantageously, such housing channel 8 defines a space inside the building wall for the mounting and housing of electrical apparatuses, such as for example electrical and telephone exchanges, exchanges of anti-intrusion and video surveillance systems, exchanges for the management of scenarios, routers or switches for data networks, etc.

Advantageously, the containment and support structure can be embedded in the building wall at the same time as that wall is installed, so that subsequent opening operations do not have to be carried out. In such a manner, for example, it is possible to obtain a savings on the hollow bricks which would form the building wall in the space occupied by the structure 1. In a particularly preferred embodiment, the structure 1 may be embedded in a partition building wall, so that foreseeing an overall thickness of the containment and support structure 1 substantially equal to the thickness of the partition building wall (for example, equal to ten centimetres), the containment and support structure 1 in practice constitutes a portion of the partition wall itself. In this case, advantageously, the bottom wall 7 of the structure 1 has its surface turned towards the opposite side with respect to the housing channel 8, which may be plastered together with the partition wall. To such end, advantageously, it is possible to foresee the fixing of a metal lath to the plasterable surface of the sheet structure 1. Such lath permits a greater hold of the mortar on the plasterable surface. For the fixing of this lath, preferably, the structure 1 includes pliable tabs 10 formed in the thickness of the bottom wall 7. Such tabs 10 are intended to be inserted in corresponding metal lath mesh before the laying of the mortar layer.

In a particularly advantageous embodiment, the containment and support structure 1 includes a base portion intended to be placed on the floor and including openings 9 on the bottom wall 7 and on the lateral walls 5, 6 adapted to permit the passage of electrical connection means, for example groups of cables contained in respective tubes, between the exterior and interior of the housing channel 8. Preferably, such base portion is realised in appropriate sheet modular base element 2 which is different, for example longer, than the other modular elements 3, 4 intended to be superimposed on such modular base element 2. More preferably, the portion of the housing channel 8 defined by such base portion is intended to be filled with mortar. Also in this case, it is possible to foresee pliable frontal tabs 11 for the fixing of a metal lath having the function of containing the mortar filling layer.

As represented in figure 1, the containment and support structure 1 moreover includes means for the fixing of an internal reinforcement framework, not shown in figure 1, which serves to reinforce the same containment and support structure. Preferably, such means include through holes 12 in the bottom wall 7 adapted to receive and to be engaged with respective fixing screws, not shown in figure 1. More preferably, such holes 12 are made at projections of the bottom wall 7, formed in the sheet profile, shaped substantially as caps which jut outwards towards the housing channel 8. The channel permits keeping a minimal distance (for example equal to 2-3 millimetres) between the reinforcement modules 20 and the bottom wall 7 of the containment and support structure 1.

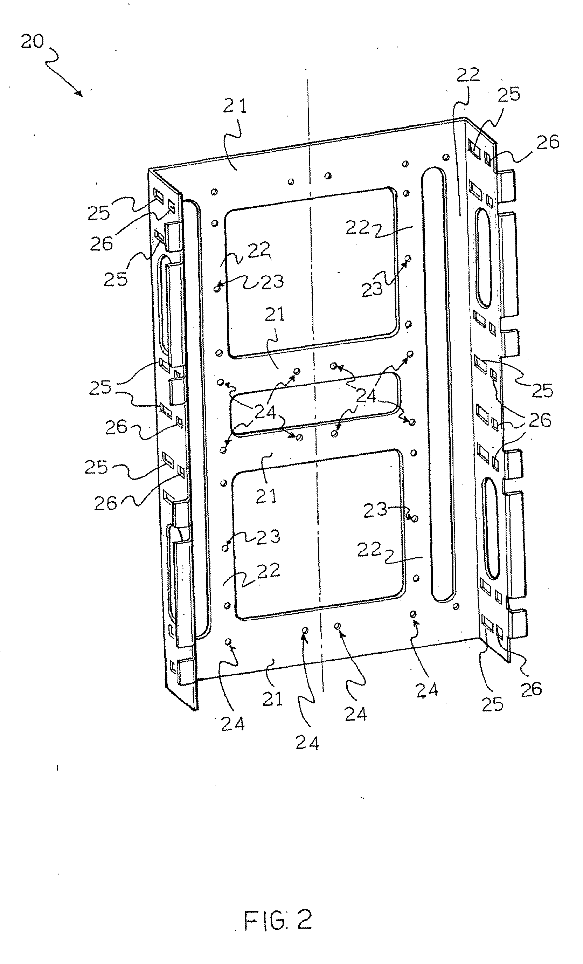

With reference to figure 2, in a particularly preferred embodiment, the internal reinforcement framework is formed by a plurality of reinforcement modules 20, each associable with a respective modular element 2, 3, 4 of the containment and support structure 1. Each of the reinforcement modules 20 is preferably realised in a slightly thicker sheet than that forming the structure 1. More preferably, each of the reinforcement modules 20 has an overall "C" or "U" profile to be adapted to the profile of the containment and support structure 1, and is formed by a framework comprising horizontal elements 21 and vertical elements 22 connected to and crossed with each other.

Advantageously, each of the reinforcement modules 20 includes a plurality of holes and slits, subdivide into:
- a first set of holes 23 facing towards the bottom wall 7 of the containment and support structure 1 and adapted to receive respective screws for the fixing of the reinforcement modules 20 to respective modular elements 2, 3, 4 of the containment and support structure 1;
- a second, more numerous set of holes 24 (only several of which are marked with the reference number 24) facing towards the bottom wall 7 of the containment and support structure 1, and foreseen to permit the fixing of accessories for the mounting of electrical apparatuses to the reinforcement modules 20 and therefore the containment and support structure 1;
- a third set of slits 25 and respective holes 26 facing towards the lateral walls 5, 6 of the structure 1 and foreseen to permit the fixing of one or more cover plates to the reinforcement modules 20, and therefore to the containment and support structure 1.

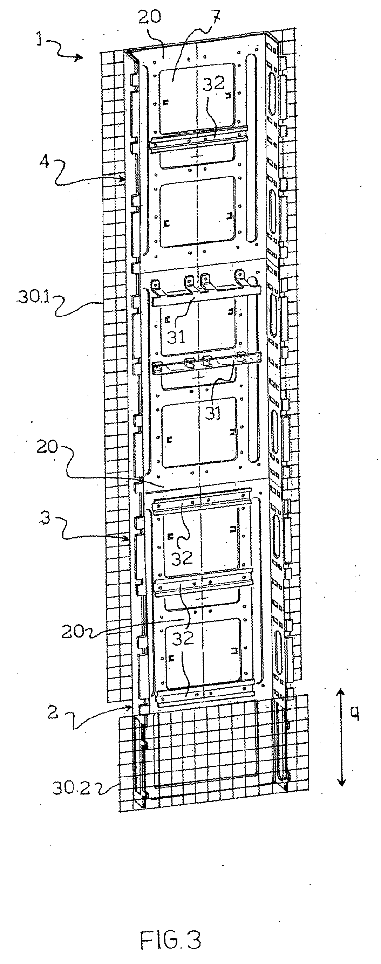

Figure 3 shows the containment and support structure 1 of figure 1 to which three reinforcement elements 20 have been associated. In such figure, the metal lath mesh 30.1, 30.2 is also visible, of which a first part 30.1 was fixed onto the surface of the bottom wall 7 intended to be plastered and a second part 30.2 was fixed to the base portion for the filler mortar containment of the latter. In practice, in a particularly preferred embodiment, the containment and support structure 1 extends inside a building wall from the floor to the ceiling, and the base portion of such structure is filled with mortar up to a height indicated with q, for example approximately equal to 30 cm. In a particularly preferred embodiment, the containment and support structure 1 is placed several centimetres (for example 2 or 3) below the finished floor. Advantageously in this case, a reference line indicating the level of the finished floor may be foreseen on the modular base element 2.

In figure 3, several accessories are also visible, such as brackets 31 and rails 32 for the mounting of electrical apparatuses. Such accessories 31, 32 are simply fixed, by means of screws in the holes 24, to the reinforcement elements 20, and hence to the containment and support structure 1.

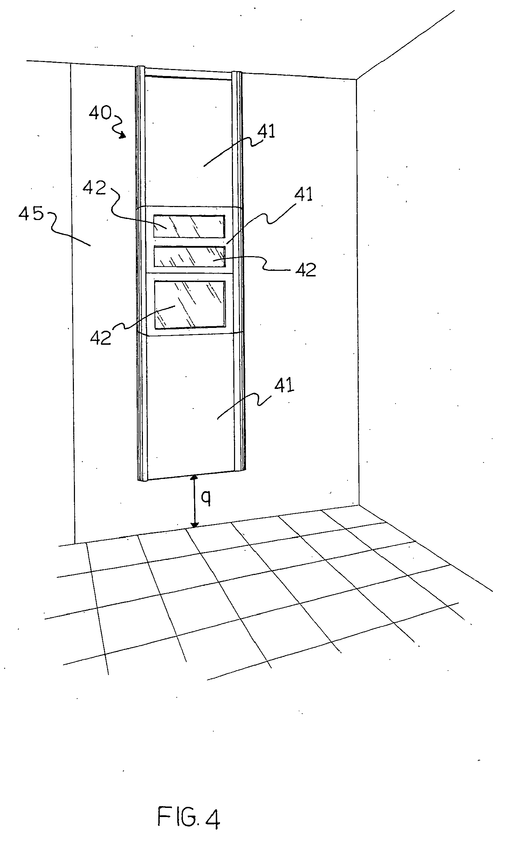

In figure 4, a particularly preferred embodiment of column 40 is shown in accordance with the present invention comprising a containment and support structure 1 (not visible in the figure), for example as described in figure 3, embedded in the building wall 45, and comprising one or more cover plates 41, for example realised in stiff plastic, whose function is both that of protecting the electrical apparatuses housed inside the column 40 and hiding the unaesthetic presence of electrical apparatuses and connection cables, which have a functional rather than aesthetic value. In particular, if it is necessary to visibly interact with electrical apparatuses housed in the column 40, it is possible to foresee cover plates 41 with windows 42 in transparent material. Moreover, if it is necessary to frequently interact at the tactile level with several electrical apparatuses, it is possible to provide such cover plates 41 with doors which may be opened (not shown in the figure).

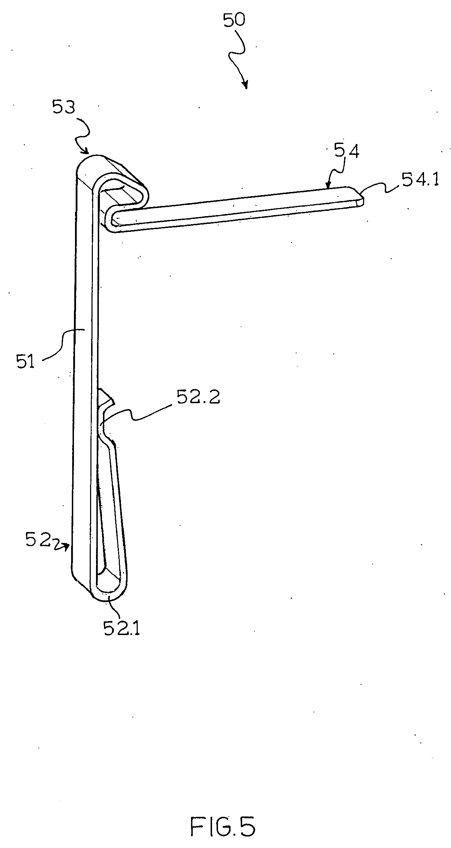

Figure 5 shows a particularly preferred embodiment of a fastener 50, usable for fixing a cover plate 41 to the part of the column 40 embedded in the wall and in particular to a reinforcement module 20.

The fastener 50 is formed by a metal bar 52 including a first end portion bent so to form a clip 52 adapted to be engaged with a lateral wall of a reinforcement element 20 and moreover including a second opposite end portion bent so to form a tooth 53 adapted to be fixedly coupled against an appropriate coupling element foreseen in the cover plate 41. The tooth 53 moreover extends into a release tongue 54 having an end 54.1 on which it is possible to operate with a tool which can used as a wedge for pushing such release tongue 54, so to bend the bar 51 to release the tooth 53 from the corresponding coupling element foreseen on the cover plate 41.

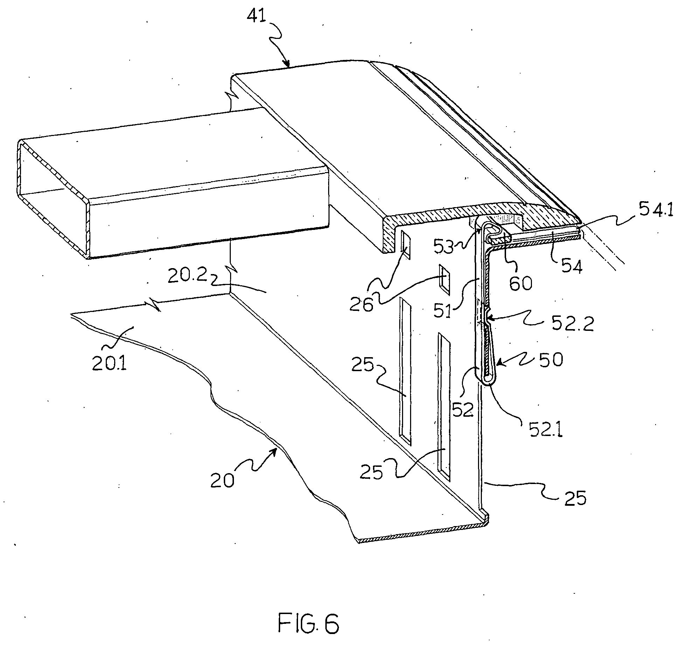

In figure 6, a partial sectional view is shown of a cover plate 41 coupled to a reinforcement module 20 by means of a fastener 50. In the figure, the reinforcement module 20 includes a bottom wall 20.1 and a lateral wall 20.2, on which a set of slits 25 and a set of holes 26 are defined, each hole 26 aligned with a respective slit 25. The clip portion 52 of the fastener 50 has a first bent end portion 52.1 which completely crosses a slit 25 and a second end portion 52.2 which is engaged with the hole 26 aligned with the slit 25. In practice, such hole 26 advantageously permits obtaining and keeping a correct alignment between the fastener 50 and the reinforcement module 20.

The tooth-shaped portion 53 of the fastener 50 is fixedly engaged with a coupling element 60, which is in practice a bar 60, foreseen on the frame of the cover plate 41 on the side turned towards the reinforcement module 20. Pushing the release tongue 54, in practice operating by means of a wedge-like tool in abutment against the end 54.1 of the tongue itself, it is possible to bend the fastener 51 to disengage the tooth 53 from the bar 60. On the other hand, advantageously, an attempt to separate the cover plate 41 with respect to the reinforcement module 20 by means of traction does not cause a separation of the plate, since in response to such traction the tooth 53 deforms so to determine a greater hold between the bar 60 and the tooth itself 53.

Based on that described above, it may thus be understood how a column 40 in accordance with the present invention permits providing a housing space at practically zero size and with little aesthetic impact inside a civilian building, permitting to fully satisfy the above described need with reference to the prior art. The proposed solution is moreover economical and has an additional advantage in that it can be made with easily transportable modular parts. For example, the modular elements 2, 3, 4 may be provided as sheets to be bent only once they have reached their place of installation.

Advantageously, the prevision of a containment and support structure 1 in sheet steel permits protecting the contained electrical apparatuses and wires housed inside the column 40 from subsequent opening or drilling work of the building wall wherein the column 40 is installed.

Obviously, with the object of satisfying contingent and specific needs, a man skilled in the art may make numerous modifications and variants to the above described column, all moreover contained in the protective context of the invention as defined by the following claims.

## Claims

1. Column (40) for housing electrical devices generally making up part of electrical installations in civilian buildings and the like, including a containment and support structure (1), said structure being embeddable in a building wall (45) of a building and comprising two substantially parallel and spaced lateral walls (5, 6), connected to each other by a bottom wall (7), said lateral walls (5, 6) and said bottom wall (7) defining a housing channel (8) inside said column (40) and intended to be received in the thickness of said building wall (45), said housing channel having an opening towards a side of such building wall (45).

2. Column (40) according to claim 1, wherein said containment and support structure (1) is made in pliable sheet steel.

3. Column (40) according to claim 1, wherein said containment and support structure (1) is formed by two or more modular elements (2, 3, 4) stacked on each other.

4. Column (40) according to any one of the preceding claims, wherein said containment and support structure (1) is a self-supporting structure.

5. Column according to any one of the preceding claims, wherein said containment and support structure (1) is such that it can be erected during the installation of said building wall (45).

6. Column (40) according to any one of the preceding claims, wherein said containment and support structure (1) is such to cover said building wall (45) from the floor to the ceiling of a room of said building.

7. Column according to any one of the preceding claims, wherein said building wall (45) is a partition wall wherein said containment and support structure (1) has overall a thickness approximately equal to the thickness of said partition wall (45) and wherein said bottom wall (7) of the containment and support structure (1) has a plasterable surface turned outward from said housing channel (8).

8. Column according to claim 7, wherein said containment and support structure (1) includes means for the fixing (10) to said plasterable surface of a metal lath (30.1) adapted to favour a better hold and better fixing of a mortar layer on said surface.

9. Column according to claims 1 and 2, wherein said fixing means include a plurality of tabs (10) made in the thickness of said sheet and pliable so to be inserted in the respective mesh of said metal lath (30.1).

10. Column (40) according to claim 1, wherein said containment and support structure (1) includes a base portion including openings (9) on said lateral walls (5, 6) and on said bottom wall (7) to permit the passage of electrical connection means through said structure (1).

11. Column (40) according to claims 3 and 10, wherein said base portion belongs to a modular base element (2) having a greater length than the other modular elements (3, 4).

12. Column (40) according to any one of the preceding claims, comprising moreover a reinforcement framework fixable to said structure (1) inside said channel (8).

13. Column according to claims 3 and 12, wherein said reinforcement framework is formed from a plurality of reinforcement modules, of which each can be coupled to a respective modular element (2, 3, 4) of said structure (1).

14. Column (40) according to claim 13, comprising moreover at least one cover plate of said opening and coupling means (50) for coupling such cover plate to a respective reinforcement module (20).

15. Column (40) according to claim 14, wherein said coupling means include a fastener (50) formed by a metal bar (52) including a first end portion bent so to form a clip (52) adapted to be engaged with a lateral wall of a reinforcement element (20) and moreover including a second opposite end portion bent so to form a tooth (53) adapted to be fixedly coupled against a respective appropriate coupling element (60) foreseen in said cover plate (41).

16. Column (40) according to claim 15, wherein the tooth (53) moreover extends into a release tongue (54) having an end (54.1) on which it is possible to operate with a tool which can be operate like a wedge for pushing such release tongue (54), so to bend the bar (51) to release the tooth (53) from the respective coupling element (60) foreseen on the cover plate (41).
